# EUROPEAN PATENT SPECIFICATION

(11) **EP 4 498 216 B1**
(45) Date of publication and mention of the grant of the patent: **14.10.2026**
(21) Application number: 23802851.8
(22) Date of filing: 08.05.2023
(51) Int. Cl.: G06F 3/0482, G06F 3/04845, G06F 3/04847, G06F 3/0488, G06F 3/04817, G06F 3/0484, G06F 3/0486, G06F 3/01, G06F 3/04842, G06F 3/0481, G06F 3/04886, G06F 3/0485

(54) **ELEMENT CONTROL METHOD AND APPARATUS FOR INFORMATION INPUT PAGE, DEVICE, AND MEDIUM**
ELEMENTSTEUERUNGSVERFAHREN UND -VORRICHTUNG FÜR EINE INFORMATIONSEINGABESEITE, VORRICHTUNG UND MEDIUM
PROCÉDÉ ET APPAREIL DE COMMANDE D'ÉLÉMENT POUR PAGE D'ENTRÉE D'INFORMATIONS, DISPOSITIF ET SUPPORT

(30) Priority: 10.05.2022 CN 202210504637
(43) Date of publication of application: 29.01.2025
(73) Proprietor: Beijing Zitiao Network Technology Co., Ltd., Beijing 100190 (CN)
(72) Inventor: WAN, Shiqi, Beijing 100028 (CN); HE, Zhimiao, Beijing 100028 (CN)
(74) Representative: Marks & Clerk LLP
(86) International application number: PCT/CN2023/092750
(87) International publication number: WO 2023/217081

(56) References cited:
- EP-B1- 2 487 613
- CN-A- 104 049 844
- CN-A- 104 820 544
- CN-A- 110 471 588
- CN-A- 114 255 056
- CN-A- 114 840 117
- JP-A- 2012 054 841
- US-A1- 2018 365 527

## Description

### TECHNICAL FIELD

The present disclosure relates to the field of computer processing technologies, and in particular to an element display method and apparatus for an information input interface, a device, a storage medium, and a computer product.

### BACKGROUND

With the continuous development of Internet and terminal technologies, intelligent terminals are more and more widely used in people's work and life. People can perform human-computer interaction or information interaction with others by inputting information into intelligent terminals.

US2018/365527A1 discloses a method for controlling a sticker classification identifier performed at a computing device. The computing device displays an instant messaging user interface including a user input region and a sticker messaging option. After detecting a user selection of the sticker messaging option, the computing device updates the instant messaging user interface by displaying a sticker panel below the user input region, the sticker panel including one or more sticker classification identifiers, each sticker classification identifier further including one or more stickers. After obtaining a movement instruction applied to a first sticker classification identifier of the one or more sticker classification identifiers, the computing device performs a first operation on the first sticker classification identifier by moving the first sticker classification identifier from a current position to a target position without moving the one or more stickers of the first sticker classification identifier.

The information input into the intelligent terminals can be various elements, such as one or more of text messages, voice messages, video messages, address links, emojis, etc. In the element inputting process, a plurality of element themes and elements are presented in a designated area, and users can gain a basic understanding of the content of elements through the element themes and can send elements to the client of information interaction through operations on the elements.

### SUMMARY

Embodiments of the present disclosure provide an element display method and apparatus for an information input interface, a device, a storage medium, and a program product. An element identification area is enlarged and then displayed for the convenience for users to view.

In a first aspect, an embodiment of the present disclosure provides an element display method for an information input interface, comprising:
displaying an element identification area and an element display area on an information input interface, wherein the element identification area comprises a plurality of element theme controls, and the plurality of element theme controls comprise element theme icons and/or element theme names;
in response to a first operation on the element identification area, acquiring an enlargement instruction corresponding to the first operation;
controlling the element identification area to be enlarged and displayed based on the enlargement instruction;
while the element identification area is enlarged and displayed, in response to a second operation on an element theme control comprised in the element identification area, marking the element theme control as being in a movable state,
determining a target position in response to a third operation on the element identification area; and
moving the element theme control in the movable state from a current position to the target position,
where the controlling the element identification area to be enlarged and displayed based on the enlargement instruction comprises:
enlarging and displaying both the plurality of element theme controls and a size of the element identification area based on the enlargement instruction.

In a second aspect, an embodiment of the present disclosure provides an element display apparatus for an information input interface, comprising:
a panel display module configured to display an element identification area and an element display area on an information input interface, wherein the element identification area comprises a plurality of element theme controls, and the plurality of element theme controls comprise element theme icons and/or element theme names;
an instruction acquisition module configured to acquire, in response to a first operation on the element identification area, an enlargement instruction corresponding to the first operation;
an enlargement and display module configured to control the element identification area to be enlarged and displayed based on the enlargement instruction;
a state marking module configured to, while enlarging and displaying the element identification area, in response to a second operation on the element theme control comprised in the element identification area, marking the element theme control as being in a movable state;
a position determination module configured to determine a target position in response to a third operation on the element identification area; and
a position moving module configured to move the element theme control in the movable state from a current position to the target position,
where the enlargement and display module is specifically configured to enlarge and display both the plurality of element theme controls and a size of the element identification area based on the enlargement instruction.

In a third aspect, an embodiment of the present disclosure provides an electronic device, which comprises:
one or more processors;
a storage means for storing one or more programs;
wherein the one or more programs, when executed by the one or more processors, cause the one or more processors to implement the element display method for the information input interface according to the above first aspect.

In a fourth aspect, an embodiment of the present disclosure provides a computer readable storage medium storing thereon a computer program which, when executed by a processor, implements the element display method for the information input interface according to the above first aspect.

In a fifth aspect, an embodiment of the present disclosure provides a computer program product comprising computer programs or instructions which, when executed by a processor, implement the element display method for the information input interface according to the above first aspect.

In a sixth aspect, an embodiment of the present disclosure provides a computer program comprising instructions which, when executed by a processor, implements the element display method for the information input interface according to the above first aspect.

### BRIEF DESCRIPTION OF THE DRAWINGS

The above and other features, advantages and aspects of embodiments of the present disclosure will become more apparent by referring to the following detailed implementations when taken in conjunction with the accompanying drawings. Throughout the drawings, the same or similar reference numerals indicate the same or similar elements. It should be understood that the drawings are schematic, and the originals and elements are not necessarily drawn to scale.
Fig. 1 is a schematic flow diagram of an element display method for an information input interface in an embodiment of the present disclosure;
Fig. 2 is a schematic diagram of an information input interface in an embodiment of the present disclosure;
Fig. 3 is a schematic diagram of enlarging and displaying an element identification area after a slide operation in an embodiment of the present disclosure;
Fig. 4 is a schematic diagram of moving an element identification area and an element display area in association in an embodiment of the present disclosure;
Fig. 5 is a schematic flow diagram of an element display method for an information input interface in an embodiment of the present disclosure;
Fig. 6 is a schematic diagram of dragging an element theme control in an embodiment of the present disclosure;
Fig. 7 is a schematic diagram of moving positions of element theme controls by a click operation in an embodiment of the present disclosure;
Fig. 8 is a schematic flow diagram of an element display method for an information input interface in an embodiment of the present disclosure;
Fig. 9 is a schematic diagram of display of an element display area in case of a vertical slide in an embodiment of the present disclosure;
Fig. 10 is a schematic diagram of displaying element theme names in an element display area in an embodiment of the present disclosure;
Fig. 11 is a schematic structural diagram of a data order adjusting apparatus in an embodiment of the present disclosure;
Fig. 12 is a schematic structural diagram of an electronic device in an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be implemented in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method implementations of the present disclosure can be performed in a different order and/or in parallel. Furthermore, method implementations can include additional steps and/or omit performing the illustrated steps. The scope of the present disclosure is not limited in this respect.

As used herein, the term "including" and its variants are non-exclusive including, that is, "including but not limited to". The term "based on" is "at least partially based on"; the term "an embodiment" means "at least one embodiment"; the term "another embodiment" means "at least one other embodiment"; the term "some embodiments" means "at least some embodiments". Related definitions of other terms will be given in the following description.

It should be noted that the concepts such as "first" and "second" mentioned in the present disclosure are only used to distinguish different means, modules or units, and are not used to limit the order or interdependence of the functions performed by these means, modules or units.

It should be noted that the modifications of "a/an" mentioned in the present disclosure are schematic rather than limiting, and those skilled in the art should understand that unless the context clearly indicates otherwise, they should be understood as "one or more".

Names of messages or information exchanged among a plurality of means in the implementations of the present disclosure are only used for illustrative purposes, and are not used to limit the scope of these messages or information.

The element display method and apparatus for an information input interface, the device, the storage medium, and the program product provided by the embodiments of the present disclosure can be applied to any message input scenario.

The above message input scenario can include scenarios where messages are input in instant messaging applications, live applications, information search applications, games applications, shopping applications, document editing applications, audio-video applications, and the like, for example, a scenario where instant messaging applications perform message interaction with other clients, for another example, a scenario where messages are input to interact with the streamer in live applications, for another example, a scenario where comments are made on the played audio-video clips in audio-video applications, for another example, a scenario where effects are selected when composing in audio-video applications. The above element is a kind of input information, for example, the element can be an emoji, or the element can be a prop identifier.

It should be noted that in the embodiments of the present disclosure, a message interaction scenario in instant messaging applications is taken as an example.

Due to the limitation of form factors of intelligent terminals, in order to display more element identifiers in a designated area, the element identifiers are designed to be small, and are not convenient for users to view. The element display method and apparatus for the information input interface, the device, the storage medium, and the program product provided by the embodiments of the present disclosure enlarge the element identification area and then display it for the convenience for users to view. Next, the element display method for the information input interface proposed by the embodiments of the present application will be introduced in detail with the accompanying drawings.

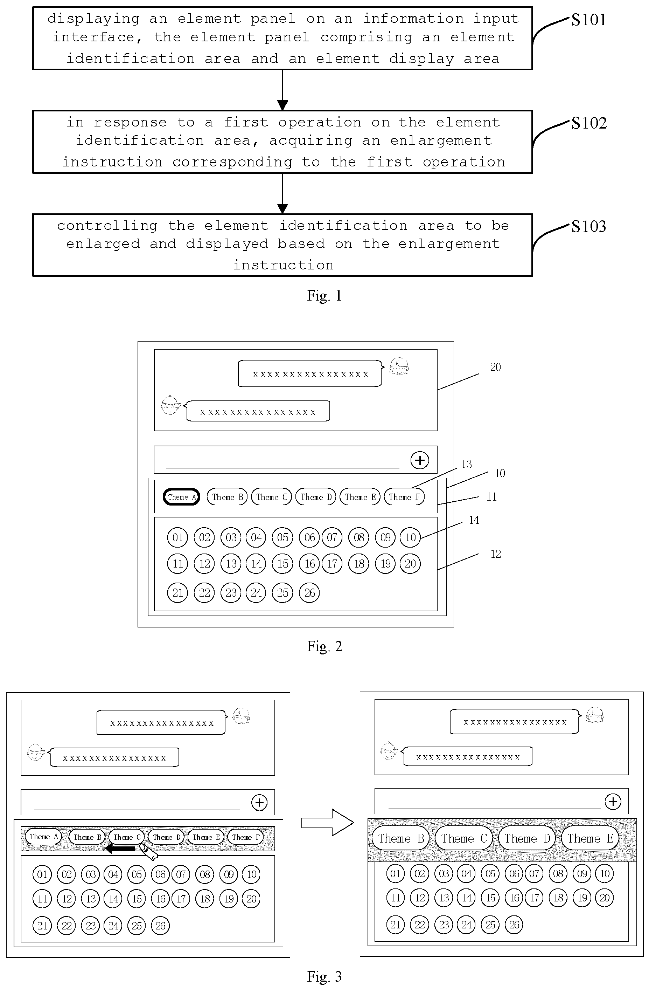

Fig. 1 is a flow diagram of an element display method for an information input interface in an embodiment of the present disclosure. The present embodiment is applicable to a case of displaying elements in an information input interface. The method can be executed by an element display apparatus for the information input interface, which can be implemented in software and/or hardware and can be configured in an electronic device.

For example, the electronic device can be a mobile terminal, a fixed terminal, or a portable terminal, such as mobile phone, site, unit, device, multimedia computer, multimedia tablet, Internet node, communicator, desktop computer, laptop computer, notebook computer, netbook computer, tablet computer, personal communication system (PCS) device, personal navigation device, personal digital assistant (PDA), audio/video player, digital camera/camcorder, positioning device, television receiver, radio broadcast receiver, E-book device, game device, or any combination thereof, including accessories and peripheral devices of these devices or a combination thereof.

Another example is that the electronic device can be a server, wherein the server can be an entity server or a cloud server, and the server can be a server or a server cluster.

As shown in Fig. 1, the element display method for the information input interface provided by the embodiments of the present disclosure mainly includes steps S101-S103.

S101, displaying an element identification area and an element display area on an information input interface.

When users use an application in an electronic device, the application will present its application interface to the users through the electronic device, and the application interface presented by the application to the users will include a plurality of functional windows related to the application in a current business scenario, such as a text input window and an element presentation window, and each functional window can correspond to an wake-up control. The current business scenario can include any scenario where information needs to be input, such as a cloud document business scenario, an instant messaging business scenario, a live scenario, and a game scenario. Users can perform a wake-up operation on a certain functional window through the wake-up control corresponding to the functional window.

In one implementation of the present disclosure, an element panel is displayed on an information input interface in response to an wake-up operation on the element panel. The users' wake-up operation on the element panel can include various implementations. For example, users can realize the wake-up operation on the element panel by triggering the wake-up control corresponding to the element panel in the current business scenario.

Further, as shown in Fig. 2, the information input interface of the electronic device mainly includes two parts: an element panel 10 and a message display area 20. The element panel 10 includes an element identification area 11 and an element display area 12. The element identification area 11 includes a plurality of element theme controls 13. The element display area 12 is used for displaying a plurality of elements 14, and illustratively, each element theme includes at least one element 14.

In the present disclosure, the elements displayed in the element display area 12 are elements corresponding to a selected element theme, wherein the selected element theme is displayed in a special way. As shown in Fig. 2, the elements displayed in the element display area 12 are elements included in element theme A, where the element theme A is displayed in a bold border.

S102, in response to a first operation on the element identification area, acquiring an enlargement instruction corresponding to the first operation.

In one implementation of the present disclosure, the first operation includes a click operation for a preset duration and/or a slide operation along a first preset angle range.

The preset duration can be set according to the actual situation, optionally, the preset duration is any one of 1 second, 2 seconds, or 3 seconds. The click operation for a preset duration can be understood as a long press operation, for example, after a long press on the element identification area 11 for a preset duration, the long press operation on the element identification area is responded. The click operation on the element identification area 11 for a preset duration can be a click operation on any blank area in the element identification area 11 for a preset duration or a click operation on any element theme control in the element identification area 11 for a preset duration.

The slide operation along a first preset angle range can be understood as that an angle between a slide direction corresponding to the slide operation of users in the element identification area and the horizontal direction is within a first preset angle range. The first preset angle range can be set according to the actual situation, and optionally, the first preset angle range is 45 degrees. The horizontal direction refers to a direction parallel to the top border of the terminal.

It should be noted that the slide operation in the element identification area can be that the slide start point is within the element identification area, the slide end point can be within the element identification area or not within the element identification area, which is not limited in the embodiments of the present disclosure.

In the embodiments of the present disclosure, the slide operation along the first preset angle range can be a leftward slide operation along the first preset angle range or a rightward slide operation along the first preset angle range.

In the embodiments of the present disclosure, the enlargement instruction on the element identification area is acquired by a long press operation or a slide operation on the element identification area, which makes the operation method simple and convenient.

The enlargement instruction can be understood as an instruction to control the element identification area to be subject to an enlargement operation.

In one implementation of the present disclosure, an enlargement instruction is acquired in response to a click operation on the element identification area for a preset duration.

In one implementation of the present disclosure, an enlargement instruction is acquired in response to a slide operation on the element identification area along a first preset angle range.

S103, controlling the element identification area to be enlarged and displayed based on the enlargement instruction.

In the embodiment of the present disclosure, the size of the element identification area can be enlarged and displayed, and the element theme controls in the element identification area can also be enlarged and displayed.

In one implementation of the present disclosure, enlarging and displaying the element identification area based on the enlargement instruction includes: enlarging and displaying both a size of the element identification area and element theme controls comprised in the element identification area based on the enlargement instruction, wherein the element theme controls comprise element theme icons and/or element theme names.

The element theme can be understood as the main content of a certain type of elements. The element theme can be expressed in the form of a picture, a text name, or both. For example, when the element is an emoji, the element theme icon can be an emoji associated with the theme, and the element theme name can be the main content of all emojis under the theme, such as graffiti symbols, cursive characters and so on. The above emoji can be a static emoji or a dynamic emoji, which is not limited in the present disclosure.

In one implementation of the present disclosure, the enlargement instruction controls the size of the element identification area and the theme controls in the element identification area to be enlarged concurrently.

The enlargement instruction can carry a preset enlargement factor, and control the size of the element identification area and the sizes of the theme controls in the element identification area to be concurrently enlarged by the preset enlargement factor based on the current display size.

The enlargement instruction can carry two different enlargement factors, wherein the size of the control element identification area is controlled to be enlarged by a first enlargement factor based on the current display size, and the sizes of the theme controls in the control element identification area are controlled to be enlarged by a second enlargement factor based on the current display size, wherein the first enlargement factor and the second enlargement factor are not specifically limited in the present disclosure.

In one embodiment of the present disclosure, when the element identification area after enlargement is displayed, a preset position of the element identification area before enlargement can be taken as a fixed point to display the element identification area after enlargement. The fixed point can be the center point of the element identification area before enlargement, the operation point corresponding to the click operation, or the slide start point corresponding to the slide operation.

In one implementation of the present disclosure, as shown in Fig. 3, in response to a leftward slide operation on the element identification area, both the size of the element identification area and the element theme controls included in the element identification area are enlarged and displayed.

In the embodiments of the present disclosure, both the size of the element identification area and the element theme controls included in the element identification area are enlarged and displayed for the convenience for users to view.

An embodiment of the present disclosure provides an element display method for an information input interface, including: displaying an element identification area and an element display area on an information input interface; in response to a first operation on the element identification area, acquiring an enlargement instruction corresponding to the first operation; controlling the element identification area to be enlarged and displayed based on the enlargement instruction. According to the embodiment of the present disclosure, after the element identification area is displayed on the information input interface, the element identification area is enlarged and then displayed in response to an operation on the element identification area, for the convenience for users to view.

On the basis of the above embodiment, the above element display method for the information input interface further includes: in response to a slide operation along a first preset angle range in the element identification area, moving and presenting the element display area at a second preset angle; and/or, in response to a slide operation along a second preset angle range in the element display area, moving and presenting the element identification area at a first preset angle; wherein, the first preset angle range includes the first preset angle and the second preset angle range includes the second preset angle.

In the embodiment of the present disclosure, the slide operation along the first preset angle range can be a leftward slide operation along the first preset angle range or a rightward slide operation along the first preset angle range. Whether it is a leftward slide operation or a rightward slide operation, the slide direction corresponding to the slide operation is within the first preset angle range. For example, the leftward slide operation can be a slide operation in the top left direction or a slide operation in the bottom left direction, and the rightward slide operation can be a slide operation in the top right direction or a slide operation in the bottom right direction.

The second preset angle can be an angle vertical to the top border of the terminal. The moving direction of the element display area at the second preset angle is associated with the direction corresponding to the slide operation on the element identification area.

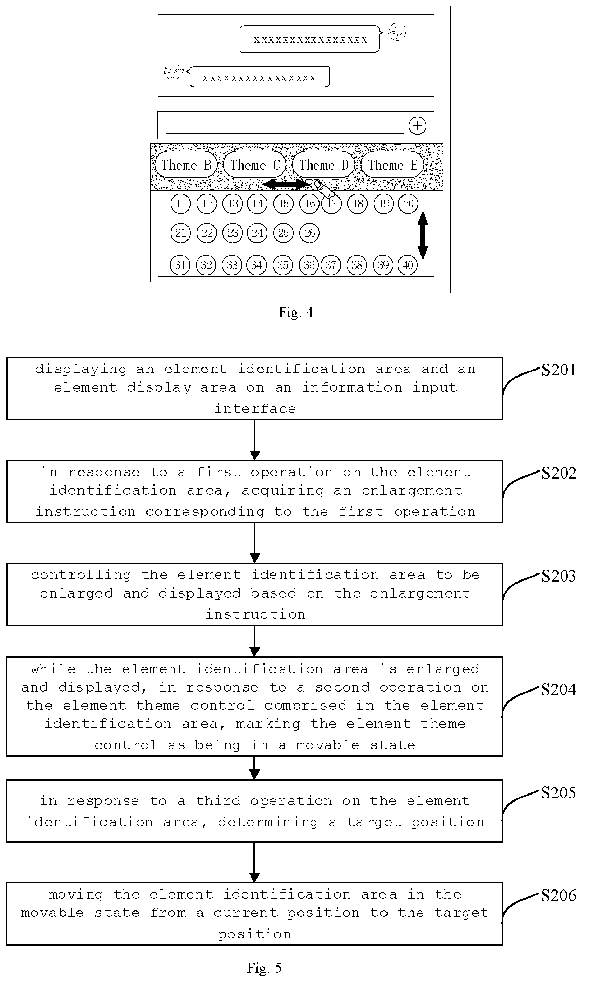

In one implementation of the present disclosure, as shown in Fig. 4, in response to a leftward slide operation along a first preset angle range in the element identification area, the element display area is moved upwards at an angle vertical to the top border of the terminal and presented. In response to a rightward slide operation along a first preset angle range in the element identification area, the element display area is moved downwards at an angle vertical to the top border of the terminal and presented.

In the embodiments of the present disclosure, the slide operation along the second preset angle range can be an upward slide operation along the second preset angle range or a downward slide operation along the second preset angle range. Whether it is a leftward slide operation or a rightward slide operation, the slide direction corresponding to the slide operation is within the first preset angle range. For example, the downward slide operation can be a slide operation in the bottom left direction or a slide operation in the bottom right direction, and the upward slide operation can be a slide operation in the top left direction or a slide operation in the top right direction.

The first preset angle can be an angle parallel to the top border of the terminal. The moving direction of the element identification area at the second preset angle is associated with the direction corresponding to the slide operation of the element display area.

In one implementation of the present disclosure, in response to a downward slide operation along a second preset angle range in the element display area, the element identification area is moved leftwards at an angle parallel to the top border of the terminal and presented.

In one implementation of the present disclosure, in response to an upward slide operation along a second preset angle range in the element display area, the element identification area is moved rightwards at an angle vertical to the top border of the terminal and presented.

In the embodiment of the present disclosure, the operations on the element display area and the element identification area are associated with the movement and presentation, so as to ensure that the elements displayed in the element display area are the elements corresponding to the element theme in the element identification area, for the convenience for users to operate.

On the basis of the above embodiment, the method further includes: while the element identification area is enlarged and displayed, in response to a fourth operation on a target element theme control comprised in the element identification area, moving and presenting the element display area at the second preset angle and positioning it to an element list corresponding to the target element theme control.

The fourth operation can be a click operation, and the target element theme control is an element theme control corresponding to the position clicked by the fourth operation. Moving and presenting the element display area at the second preset angle can be understood as vertically moving and presenting the element display area up and down.

When the target element theme control is on the right side of the current element theme control, in response to the fourth operation on the target element theme control, the element display area is vertically moved upwards and presented and positioned to present an element list corresponding to the target element theme control. When the target element theme control is on the left side of the current element theme control, in response to the fourth operation on the target element theme control, the element display area is vertically moved downwards and presented and positioned to present an element list corresponding to the target element theme control. The current element theme control is an element theme control corresponding to the element lists displayed in the current element display area.

In the embodiment of the present disclosure, after the target element theme control is selected, the element display area is quickly moved and positioned to present the element list corresponding to the target element theme control, so as to ensure a one-to-one correspondence relationship between the element theme controls and the element lists in the element display area.

On the basis of the above embodiments, the embodiment of the present disclosure further optimizes the element display method for the information input interface. As shown in Fig. 5, the optimized element display method for the information input interface mainly includes the steps of S201-S206.

S201, displaying an element identification area and an element display area on an information input interface.

S202, in response to a first operation on the element identification area, acquiring an enlargement instruction corresponding to the first operation.

S203, controlling the element identification area to be enlarged and displayed based on the enlargement instruction.

The flow of steps S201-S203 provided in the present embodiment is the same as that of steps S101-S103 provided in the above embodiment, and the specific operation flow and mode can refer to the description in the above embodiment, which is not specifically limited in the present embodiment.

S204, while enlarging and displaying the element identification area, in response to a second operation on the element theme control comprised in the element identification area, marking the element theme control as being a movable state.

The element theme control can be any element theme control in the element identification area, and the second operation on the element theme control can include a click operation on the element theme control.

The element theme control selected by the click operation is marked as being in a movable state, and the element theme control in the movable state can be moved within the element identification area according to subsequent operations. Marking as being in a movable state can be performed only in the background without being specially displayed on the information input interface. Marking as being in a movable state can also be performed in the background while being specially displayed on the information input interface. Being specially displayed can be being enlarged and displayed, or being displayed with a shadow added to the background, or a dynamic display of the element theme control. The special display is used for prompting users that the element theme control is in a movable state and can be moved.

S205, in response to a third operation on the element identification area, determining a target position.

In the present embodiment, the third operation is used for determining a target position for the element theme control in the movable state in the element identification area. The third operation can be a click operation or a drag operation, which is not specifically limited in the present disclosure.

In one implementation of the present disclosure, determining a target position in response to a third operation on the element identification area includes: in response to a drag operation on the element theme control in the movable state, acquiring a drag trajectory corresponding to the drag operation, wherein the drag operation is successive to the second operation; in response to a drag release operation on the element theme control in the movable state, determining a horizontal movement parameter corresponding to the drag trajectory; determining the target position based on the horizontal movement parameter.

The drag operation is received via a touch screen of the terminal, a peripheral control device of the terminal, and a camera of the terminal. The device can follow the drag operation to move the element theme control to any position in the element identification area. The drag operation following the second operation can be understood as directly executing the drag operation after the second operation, specifically, directly executing the drag operation without leaving the trigger means after the click operation.

In one implementation of the present disclosure, in response to a drag operation on the element theme control in the movable state, a drag trajectory corresponding to the drag operation is acquired in real time. The drag trajectory can be understood as a position through which the drag operation passes. The drag trajectory can be composed of a series of coordinate points.

The drag release operation can be understood as a cancellation of the drag operation. Optionally, the drag release operation can be that it is detected that users no longer touch an input means for acquiring the drag operation. For example, a user's finger leaves the touch screen and it is detected that the user no longer touches the input means for acquiring the drag operation.

In the embodiment of the present disclosure, in response to the above drag release operation, a corresponding drag start point and drag end point in the drag trajectory are acquired, and a horizontal distance between the drag start point and drag end point is determined and taken as a horizontal movement parameter corresponding to the drag trajectory.

In one implementation of the present disclosure, in response to the above drag release operation, a straight line segment corresponding to the drag trajectory is acquired, and the length of the right-angle side of the straight line segment is calculated based on the straight line segment, the drag start point, and the drag end point. The length of the right-angle side parallel to the top border of the terminal is determined as the horizontal movement parameter.

Specifically, the drag start point and the drag end point can be expressed in the form of coordinates. Based on the two coordinate points, the difference between the two horizontal coordinates is calculated as the horizontal distance between the drag start point and the drag end point.

In one implementation of the present disclosure, the horizontal coordinate of the drag start point is added with the horizontal movement parameter to obtain a numerical value as the horizontal coordinate of the target position, and the vertical ordinate of the drag start point is taken as the vertical ordinate of the target position.

In one implementation of the present disclosure, another way to determine the target position is provided, in which the horizontal coordinate of the drag end point is taken as the horizontal coordinate of the target position, and the vertical ordinate of the drag start point is taken as the vertical ordinate of the target position.

In the embodiment of the present disclosure, the target position of the element theme control is determined by the drag operation, which is simple and convenient in operation.

In one implementation of the present disclosure, while acquiring, in response to a drag operation on an element theme control in a movable state, a drag trajectory corresponding to the drag operation, the method further includes: in response to the drag operation on the element theme control in the movable state, controlling the element theme control in the movable state to be moved following the drag operation.

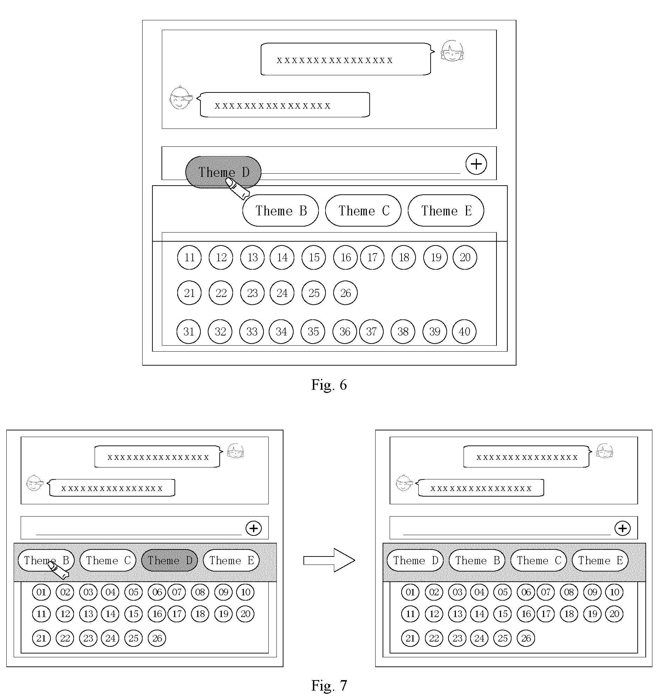

As shown in Fig. 6, an element theme D control is taken as the element theme control in the movable state, and the element theme D control is moved following the drag operation upon the user's drag operation on the element theme D control.

In the embodiment of the present disclosure, following the drag operation, the element theme control in the movable state presents an animation effect of moving, which is convenient for users to know the position of the element theme control in real time.

In one implementation of the present disclosure, while controlling the element theme control in the movable state to be moved following the drag operation, the method further includes: controlling a first element theme control to be moved in a preset direction, wherein, the first element theme control is an element theme control corresponding to a position through which the drag trajectory passes, and the preset direction is a direction opposite to the drag trajectory.

The element theme controls corresponding to the positions through which the drag trajectory passes can be understood as the element theme controls consistent with the horizontal coordinates corresponding to the drag trajectory.

Further, when the drag trajectory moves leftwards, the preset direction is rightward, and when the drag trajectory moves rightwards, the preset direction is leftward.

As shown in Fig. 6, an element theme B control and an element theme C control are taken as the first element theme controls. With the user's drag operation on the element theme D control, the element theme D control is moved leftwards and the element theme B control and the element theme C control are moved rightwards.

In the embodiment of the present disclosure, the element theme controls associated with the drag trajectory are also moved correspondingly, so as to quickly realize the position change of the element theme controls.

In one implementation of the present disclosure, determining a target position in response to a third operation on the element identification area includes: in response to a click operation on an element theme control in a non-movable state, acquiring a position where the element theme control in the non-movable state is located; determining the position where the element theme control in the non-movable state is located as the target position.

In the embodiments of the present disclosure, the element theme control in the non-movable state refers to all the element theme controls, except the element theme controls in the movable state, in the element identification area.

As shown in Fig. 7, the element theme D control is an element theme control in a movable state, and the element theme B control is an element theme control in a non-movable state. In response to the click operation on the element theme B control, the position of the element theme B control is acquired, and the position of the element theme B control is determined as the target position. The element theme D control is moved to the position of the element theme B control, and the element theme B control and the element theme C control are moved rightwards one position.

In the embodiments of the present disclosure, the target position is determined by means of clicking the element theme controls in the non-movable state, which is simple and convenient in operation.

S206, moving the element them controls in the movable state from a current position to the target position.

In the embodiments of the present disclosure, the position adjustment of the element theme controls is realized through the operation on the element theme controls included in the element identification area, so that users can adjust the frequently used or interested element theme control to a prominent position for the convenience for users to use.

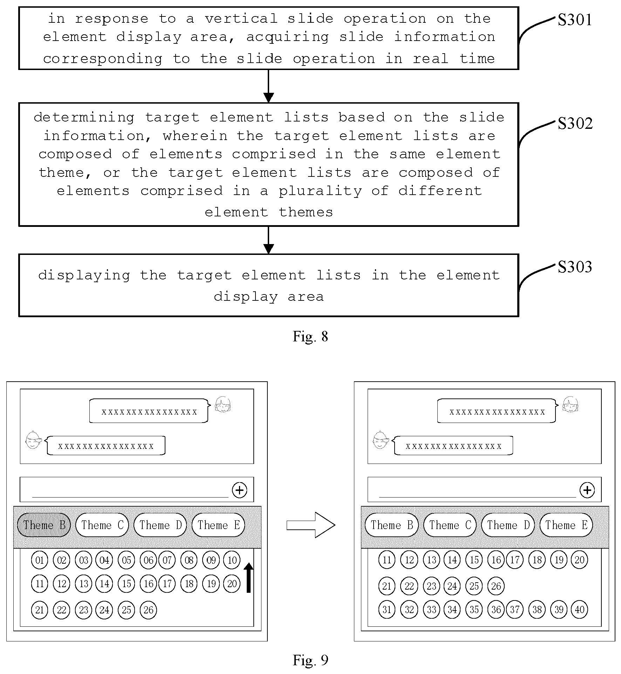

On the basis of the above embodiments, the embodiments of the present disclosure further optimize the element display method for the information input interface. As shown in Fig. 8, the optimized element display method for the information input interface mainly includes steps of:

S301, in response to a vertical slide operation on the element display area, acquiring slide information corresponding to the slide operation in real time.

The vertical slide operation can be understood as a slide operation vertical to the top border of the terminal. The slide information includes a slide direction and a slide distance.

In the present disclosure, the slide information corresponding to the slide operation is acquired in real time, so that with the vertical slide operation, the element lists in the element display area constantly moves and changes.

S302, determining target element lists based on the slide information, wherein, the target element lists are composed of elements comprised in the same element theme, or the target element lists are composed of elements comprised in a plurality of different element themes.

In the implementation of the present disclosure, the element display area includes at least one row of element lists, and each element list includes at least one element. The target element lists can be understood as an element list to be displayed in the element display area.

The target element lists are composed of elements included in the same element theme, which can be understood as that the element lists displayed in the element display area belong to the same element theme. For example, the element lists displayed in the element display area all belong to element theme A.

The target element lists are composed of elements included in the same element theme, which can be understood as that the element lists displayed in the element display area belong to different element themes. For example, the element lists displayed in an upper portion of the element display area all belong to element theme A, and the element lists displayed in a lower portion of the element display area all belong to element theme B. Different element themes can be two or more element themes.

In one implementation of the present disclosure, determining target element lists based on the slide information includes: acquiring current element lists in the element display area; when a slide distance included in the slide information is greater than a preset length, deleting a first element list in the current element lists, wherein the first element list is a list of at least one row of elements in the current element lists; adding a second element list to the current element lists to obtain the target element lists.

The current element lists refer to element lists currently being displayed in the element display area. The preset length can be set according to the actual situation. The preset length can be a width of one row of element list in the element display area.

In one implementation of the present disclosure, in a case where the vertical slide operation is an upward slide, the first element list is a first row of the current element lists, and the second element list is an element list following the last row of the current element lists; in a case where the slide operation is a downward slide, the first element list is the last row of the current element lists, and the second element list is an element list preceding the first row of the current element lists.

The last row of element list and the element list following the last row of element list can belong to the same element theme or different element themes. The first row of element list and the element list preceding the first row of element list can belong to the same element theme or different element themes.

In the embodiments of the present disclosure, when the vertical slide operation is an upward slide, the first row of the current element lists is deleted, and the element list following the last row of the current element lists is added to the current element lists, so as to form target element lists.

In the embodiments of the present disclosure, when the vertical slide operation is a downward slide, the last row of the current element lists is deleted, and the element list preceding the first row of the current element lists is added to the current element list, so as to form target element lists.

It should be noted that the embodiments of the present disclosure provide a display mode of adding only one row of element list. After the target element lists are displayed in the element display area, the target element lists are taken as new current element lists, and slide information corresponding to the slide operation is re-acquired, so as to move and display the element lists according to the slide information.

As shown in Fig. 9, when the vertical slide operation is an upward slide, the first row of the current element lists 01, 02, 03, 04, 05, 06, 07, 08, 09 and 10 are deleted, and the element list 31, 32, 33, 34, 35, 36, 37, 38, 39, and 40 following the last row of the current element lists are added to the current element list, so as to form target element lists.

S303, displaying the target element lists in the element display area.

In one implementation of the present disclosure, displaying the target element lists in the element display area includes: in a case where the target element lists are composed of elements comprised in a plurality of different element themes, displaying corresponding element theme names in a preset area in the element display area.

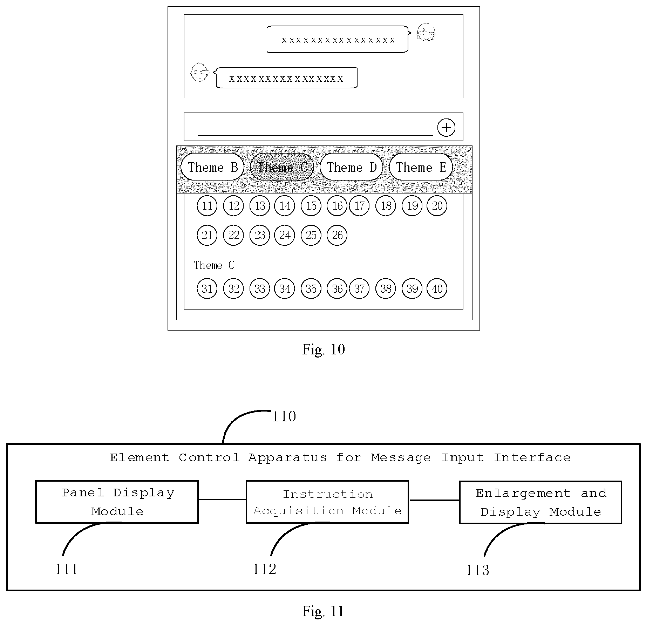

As shown in Fig. 10, when the target element lists are composed of elements comprised in a plurality of different element themes, an element theme name is displayed preceding one row of element list comprised in an element theme. In this way, it is convenient for users to quickly understand the name of the element list.

In the embodiments of the present disclosure, through the vertical slide operation on the element display area, the switching between the element lists corresponding to different element themes is realized, which enriches the element switching mode and is convenient for users to operate.

In one implementation of the present disclosure, the element display area includes a list of first type elements and a list of second type elements, wherein elements in the list of first type elements and the list of second type elements are sent in different ways, and the method further includes: in response to a first presentation switching operation between the list of first type elements and the list of second type elements in the element display area, presenting the switching between the list of first type elements and the list of second type elements with a damping effect; and/or in response to a second presentation switching operation on element lists within the list of first type elements or within the list of second type elements, presenting the switching of the elements with an undamping effect. The undamping effect means that users can perform a smooth slide operation without blocking feeling, while the damping effect means that users have a slide resistance during the slide operation, that is, there is a blocking feeling or stuck feeling in slide. Illustratively, when the switching between the list of first type elements and the list of second type elements is performed, it is impossible for users to smoothly slide from the list of first type elements to the list of second type elements directly. Instead, when the list of second type elements reach the preset position, a pause occurs, and the list of second type elements continue to slide from the preset position only after a preset duration or when the user continues to slide for a preset duration. Further, the slide speed of the list of second type elements after continuing to slide from the preset position can be different from that when the list of second type elements do not reach the preset position yet.

Illustratively, the list of first type elements can be sent in such a way as to click the element in the element display area, display the element in the message input box, and send it together with the text message input in the message input box. That is, the first type of elements can be sent with text to the other side as a message. The list of second type elements can be sent in such a way as to click the element in the element display area, directly send the element to the other side, and display it in the message interaction area rather than in the message input box. The list of first type elements and the list of second type elements can respectively include elements corresponding to one or more element themes.

In the present embodiment, when a vertical slide operation is performed in the element display area to perform the switching between the list of first type elements and the list of second type elements, the switching between the list of first type elements and the list of second type elements is presented with a damping effect.

In the present embodiment, when a vertical slide operation is performed in the element display area to perform the switching of element lists within the list of first type elements and of element lists within the list of second type elements, the switching of the list of first type elements and the list of second type elements is presented with an undamping effect.

In the embodiment of the present disclosure, the damping effect is generated by the switching between different types of element lists, which can enhance users' perception of distinguishing different types of elements and improve users' usage experience.

Fig. 11 is a schematic structural diagram of an element display apparatus for an information input interface in an embodiment of the present disclosure. The present embodiment is applicable to controlling elements in an information input interface. The element display apparatus for the information input interface can be implemented by software and/or hardware, and can be configured in an electronic device.

As shown in Fig. 11, the element display apparatus for the information input interface provided by the embodiment of the present disclosure mainly includes: a panel display module 111, an instruction acquisition module 112, and an enlargement and display module 113.

The panel display module 111 is configured to display an element identification area and an element display area on an information input interface;
the instruction acquisition module 112 is configured to acquire, in response to a first operation on the element identification area, an enlargement instruction corresponding to the first operation;
the enlargement and display module 113 is configured to control the element identification area to be enlarged and displayed based on the enlargement instruction.

The enlargement and display module 113 is specifically configured to enlarge and display both a size of the element identification area and element theme controls comprised in the element identification area based on the enlargement instruction, wherein the element theme controls comprise element theme icons and/or element theme names.

The apparatus further includes: a state marking module configured to, while enlarging and displaying the element identification area, in response to a second operation on the element theme control comprised in the element identification area, marking the element theme control as being in a movable state; a position determination module configured to determine a target position in response to a third operation on the element identification area; a position moving module configured to move the element theme control in the movable state from a current position to the target position.

In one implementation of the present disclosure, when configured to determine a target position in response to a third operation on the element identification area, the position determination module comprises: a trajectory acquisition unit configured to acquire, in response to a drag operation on the element theme control in the movable state, a drag trajectory corresponding to the drag operation, wherein the drag operation is successive to the second operation; a movement parameter determination unit configured to determine, in response to a drag release operation on the element theme control in the movable state, a horizontal movement parameter corresponding to the drag trajectory; a position determination unit configured to determine the target position based on the horizontal movement parameter.

In one implementation of the present disclosure, the position determination module further includes: a control moving unit configured to, while acquiring a drag trajectory corresponding to a drag operation in response to the drag operation on the element theme control in the movable state, control the element theme control in the movable state to be moved following the drag operation.

In one implementation of the present disclosure, while controlling the element theme control in the movable state to be moved following the drag operation, the control moving unit is further configured to control a first element theme control to be moved in a preset direction, wherein, the first element theme control is an element theme control corresponding to a position through which the drag trajectory passes, and the preset direction is a direction opposite to the drag trajectory.

In one implementation of the present disclosure, when determining a target position in response to a third operation on the element identification area, the position determination module includes: a position acquisition unit configured to acquire, in response to a click operation on an element theme control in a non-movable state, a position where the element theme control in the non-movable state is located; a position determination unit configured to determine the position where the element theme control in the non-movable state is located as the target position.

In one implementation of the present disclosure, the element display area includes at least one row of element lists, and each element list includes at least one element. The apparatus further comprises: a slide information acquisition module configured to acquire, in response to a vertical slide operation on the element display area, slide information corresponding to the slide operation in real time; a target element list determination module configured to determine target element lists based on the slide information, wherein, the target element lists are composed of elements comprised in the same element theme, or the target element lists are composed of elements comprised in a plurality of different element themes; a target element list display module configured to display the target element lists in the element display area.

In one implementation of the present disclosure, the target element list determination module comprises: a current element list acquisition unit configured to acquire current element lists in the element display area; an element list deletion unit configured to delete, when a slide distance comprised in the slide information is greater than a preset length, a first element list in the current element list, wherein the first element list is a list of at least one row of elements in the current element lists; an element list addition unit configured to add a second element list to the current element lists to obtain the target element lists.

In one implementation of the present disclosure, in a case where the vertical slide operation is an upward slide, the first element list is a first row of the current element list, and the second element list is an element list following the last row of the current element list; in a case where the vertical slide operation is a downward slide, the first element list is the last row of the current element list, and the second element list is an element list preceding the first row of the current element list.

In one implementation of the present disclosure, when displaying the target element lists in the element display area, the target element list display module is further configured to display, in a case where the target element lists are composed of elements comprised in a plurality of different element themes, corresponding element theme names in a preset area in the element display area.

In one implementation of the present disclosure, the element display area includes a list of first type elements and a list of second type elements, wherein elements in the list of first type elements and the list of second type elements are sent in different ways, and the apparatus further includes: a damping presentation module configured to present, in response to a first presentation switching operation between the list of first type elements and the list of second type elements in the element display area, the switching between the list of first type elements and the list of second type elements with a damping effect; and/or an undamping presentation module configured to present, in response to a second presentation switching operation on element lists within the list of first type elements or within the list of second type elements, the switching of the elements with an undamping effect.

In one implementation of the present disclosure, the first operation includes a click operation for a preset duration and/or a slide operation along a first preset angle range.

In one implementation of the present disclosure, the apparatus further includes: an element display area moving and presenting module configured to move and present, in response to a slide operation along a first preset angle range in the element identification area, the element display area at a second preset angle; and/or, in response to a slide operation along a second preset angle range in the element display area, move and present the element identification area at a first preset angle; wherein, the first preset angle range includes the first preset angle and the second preset angle range includes the second preset angle.

In one implementation of the present disclosure, the element display area moving and presenting module is further configured to, while enlarging and displaying the element identification area, in response to a fourth operation on the target element theme controls comprised in the element identification area, move and present the element display area at the second preset angle and position the element display area to present an element list corresponding to the target element theme control.

The adjustment apparatus for element display of an information input interface provided by the embodiment of the present disclosure can execute the steps executed in the element display method for the information input interface provided by the method embodiment of the present disclosure, and has the execution steps and beneficial effects, which are not repeated here.

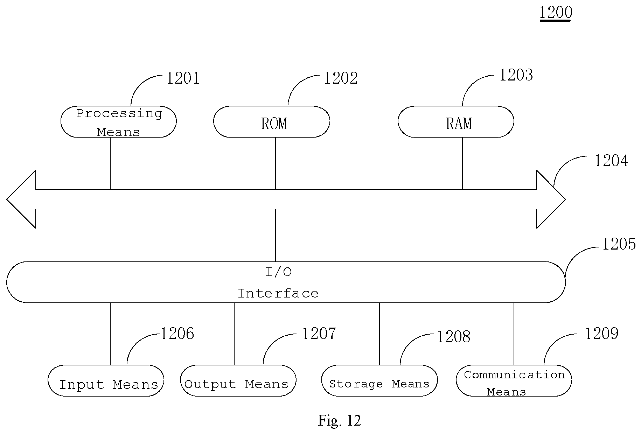

Fig. 12 is a schematic structural diagram of an electronic device in an embodiment of the present disclosure. Referring specifically to Fig. 12, there is shown a schematic structural diagram of an electronic means 1200 adapted for implementing an embodiment of the present disclosure. The electronic means 1200 in the embodiment of the present disclosure can include, but is not limited to, mobile terminals such as mobile phone, notebook computer, digital broadcast receiver, Personal Digital Assistant (PDA), Tablet Computer (PAD), Portable Multimedia Player (PMP), vehicle-mounted terminal (such as vehicle-mounted navigation terminal), and wearable terminal device, as well as fixed terminals such as digital TV, desktop computer, and smart home device. The electronic device shown in Fig. 12 is just an example, and should not bring any limitation to the functions and usage scope of the embodiment of the present disclosure.

As shown in Fig. 12, the electronic means 1200 can include a processing means (e.g., a central processor, a graphics processor, etc.) 1201, which can execute various appropriate actions and processes according to a program stored in a read-only memory (ROM)1202 or a program loaded from a storage means 1208 into a random access memory (RAM)1203 to implement a picture rendering method according to the embodiment of the present disclosure. In the RAM 1203, various programs and data required for the operation of the terminal device 1200 are also stored. The processing means 1201, the ROM 1202 and the RAM 1203 are connected to each other through a bus 1204. An input/output (I/O) interface 1205 is also connected to the bus 1204.

Generally, the following means can be connected to the I/O interface 1205: an input means 1206 including, for example, a touch screen, a touch pad, a keyboard, a mouse, a camera, a microphone, an accelerometer, a gyroscope, etc.; an output means 1207 including, for example, a liquid crystal display (LCD), a speaker, a vibrator, etc.; a storage means 1208 including, for example, a magnetic tape, a hard disk, etc.; and a communication means 1209. The communication means 1209 can allow the terminal device 1200 to perform wireless or wired communication with other devices so as to exchange data. Although Fig. 12 shows a terminal device 1200 with various means, it should be understood that it is not required to implement or provide all the means shown. More or fewer means can alternatively be implemented or provided.

In particular, according to an embodiment of the present disclosure, the process described above with reference to the flow diagram can be implemented as a computer software program. For example, an embodiment of the present disclosure includes a computer program product including a computer program carried on a non-transitory computer readable medium, and the computer program contains program codes for executing the method shown in the flow diagram, thereby implementing the element display method for the information input interface as described above. In such an embodiment, the computer program can be downloaded and installed from the network through the communication means 1209, or installed from the storage means 1208, or installed from the ROM 1202. When executed by the processing means 1201, the computer program executes the above functions defined in the method of the embodiment of the present disclosure.

It should be noted that the computer readable medium mentioned above in the present disclosure can be a computer readable signal medium or a computer readable storage medium or any combination of the two. The computer readable storage medium can be, for example, but not limited to, an electrical, magnetic, optical, electromagnetic, infrared, or semiconductor system, apparatus or device, or any combination of the above. More specific examples of the computer readable storage medium can include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer readable storage medium can be any tangible medium containing or storing a program, which can be used by or in combination with an instruction execution system, apparatus or device. In the present disclosure, the computer readable signal medium can include a data signal propagated in baseband or as part of a carrier wave, in which computer readable program codes are carried. This propagated data signal can take many forms, including but not limited to an electromagnetic signal, an optical signal or any suitable combination of the above. The computer readable signal medium can also be any computer readable medium other than the computer readable storage medium, which can send, propagate or transmit a program for use by or in connection with an instruction execution system, apparatus or device. The program codes contained in the computer readable medium can be transmitted by any suitable medium, including but not limited to: wires, optical cables, RF (radio frequency) and the like, or any suitable combination of the above.

In some implementations, clients and servers can communicate by using any currently known or future developed network protocol such as HyperText Transfer Protocol (HTTP), and can be interconnected with digital data communication in any form or medium (for example, a communication network). Examples of a communication network include a local area network ("LAN"), a wide area network ("WAN"), the Internet (for example, the Internet) and end-to-end networks (for example, ad hoc end-to-end networks), as well as any currently known or future developed networks.

The above computer readable medium can be contained in the above electronic device, or it can exist alone without being assembled into the electronic device.

The above computer readable medium carries one or more programs which, when executed by the terminal device, cause the terminal device to: display an element identification area and an element display area on an information input interface; in response to a first operation on the element identification area, acquire an enlargement instruction corresponding to the first operation; control the element identification area to be enlarged and displayed based on the enlargement instruction.

Optionally, when the above one or more programs are executed by the terminal device, the terminal device can also execute other steps described in the above embodiment.

Computer program codes for executing the operations of the present disclosure can be written in one or more programming languages or their combinations, including but not limited to object-oriented programming languages, such as Java, Smalltalk, and C++, as well as conventional procedural programming languages, such as "C" language or similar programming languages. The program codes can be completely executed on the user computer, partially executed on the user computer, executed as an independent software package, partially executed on the user computer and partially executed on a remote computer, or completely executed on the remote computer or a server. In the case involving a remote computer, the remote computer can be connected to a user computer through any kind of network, including a local area network (LAN) or a wide area network (WAN), or can be connected to an external computer (for example, through the Internet using an Internet service provider).

The flow diagrams and block diagrams in the drawings illustrate the architecture, functions and operations of possible implementations of the system, method and computer program product according to various embodiments of the present disclosure. In this regard, each block in the flow diagrams or block diagrams can represent a module, a program segment, or part of codes that contains one or more executable instructions for implementing specified logical functions. It should also be noted that in some alternative implementations, the functions noted in the blocks can occur in a different order than those noted in the drawings. For example, two blocks shown in succession can actually be executed substantially in parallel, and they can sometimes be executed in the reverse order, depending on the functions involved. It should also be noted that each or a combination of blocks in the block diagrams and/or flow diagrams can be implemented by a dedicated hardware-based system that executes specified functions or operations, or by a combination of dedicated hardware and computer instructions.

The units involved in the embodiments described in the present disclosure can be implemented in software or hardware. The name of the unit does not constitute the limitation of the unit itself in some cases.

The functions described above herein can be at least partially executed by one or more hardware logic components. For example, without limitation, exemplary types of hardware logic components that can be used include: Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the present disclosure, a machine readable medium can be a tangible medium that can contain or store a program for use by or in connection with an instruction execution system, apparatus or device. The machine readable medium can be a machine readable signal medium or a machine readable storage medium. The machine readable medium can include, but is not limited to, an electronic, magnetic, optical, electromagnetic, infrared, or semiconductor system, apparatus or device, or any suitable combination of the above. More specific examples of the machine readable storage medium can include an electrical connection based on one or more lines, a portable computer disk, a hard disk, a random access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

According to one or more embodiments of the present disclosure, the present disclosure provides an element display method for an information input interface, including: displaying an element identification area and an element display area on an information input interface; in response to a first operation on the element identification area, acquiring an enlargement instruction corresponding to the first operation; controlling the element identification area to be enlarged and displayed based on the enlargement instruction.

According to one or more embodiments of the present disclosure, the present disclosure provides an element display method for an information input interface, wherein, enlarging and displaying the element identification area based on the enlargement instruction comprises: enlarging and displaying both a size of the element identification area and element theme controls comprised in the element identification area based on the enlargement instruction, wherein the element theme controls comprise element theme icons and/or element theme names.

According to one or more embodiments of the present disclosure, the present disclosure provides an element display method for an information input interface, wherein the method further comprises: while enlarging and displaying the element identification area, in response to a second operation on the element theme control comprised in the element identification area, marking the element theme control as being in a movable state; in response to a third operation on the element identification area, determining a target position; moving the element theme control in the movable state from a current position to the target position.

According to one or more embodiments of the present disclosure, the present disclosure provides an element display method for an information input interface, wherein, determining a target position in response to a third operation on the element identification area comprises: in response to a drag operation on the element theme control in the movable state, acquiring a drag trajectory corresponding to the drag operation, wherein the drag operation is successive to the second operation; in response to a drag release operation on the element theme control in the movable state, determining a horizontal movement parameter corresponding to the drag trajectory; determining the target position based on the horizontal movement parameter.

According to one or more embodiments of the present disclosure, the present disclosure provides an element display method for an information input interface, wherein, while acquiring a drag trajectory corresponding to a drag operation in response to the drag operation on the element theme control in the movable state, the method further comprises: in response to the drag operation on the element theme control in the movable state, controlling the element theme control in the movable state to be moved following the drag operation.

According to one or more embodiments of the present disclosure, the present disclosure provides an element display method for an information input interface, wherein, while controlling the element theme control in the movable state to be moved following the drag operation, the method further comprises: controlling a first element theme control to be moved in a preset direction, wherein, the first element theme control is an element theme control corresponding to a position through which the drag trajectory passes, and the preset direction is a direction opposite to the drag trajectory.

According to one or more embodiments of the present disclosure, the present disclosure provides an element display method for an information input interface, wherein determining a target position in response to a third operation on the element identification area comprises: in response to a click operation on an element theme control in a non-movable state, acquiring a position where the element theme control in the non-movable state is located; determining the position where the element theme control in the non-movable state is located as the target position.

According to one or more embodiments of the present disclosure, the present disclosure provides an element display method for an information input interface, wherein, the element display area includes at least one row of element lists, and each element list includes at least one element; the method further comprises: in response to a vertical slide operation on the element display area, acquiring slide information corresponding to the slide operation in real time; determining target element lists based on the slide information, wherein, the target element lists are composed of elements comprised in the same element theme, or the target element lists are composed of elements comprised in a plurality of different element themes; displaying the target element lists in the element display area.

According to one or more embodiments of the present disclosure, the present disclosure provides an element display method for an information input interface, wherein, determining target element lists based on the slide information comprises: acquiring current element lists in the element display area; when a slide distance comprised in the slide information is greater than a preset length, deleting a first element list in the current element lists, wherein the first element list is a list of at least one row of elements in the current element lists; adding a second element list to the current element lists to obtain the target element lists.

According to one or more embodiments of the present disclosure, the present disclosure provides an element display method for an information input interface, wherein, in a case where the vertical slide operation is an upward slide, the first element list is a first row of the current element list, and the second element list is an element list following the last row of the current element list; in a case where the vertical slide operation is a downward slide, the first element list is the last row of the current element list, and the second element list is an element list preceding the first row of the current element list.

According to one or more embodiments of the present disclosure, the present disclosure provides an element display method for an information input interface, wherein, displaying the target element lists in the element display area comprises: in a case where the target element lists are composed of elements comprised in a plurality of different element themes, displaying corresponding element theme names in a preset area in the element display area.

According to one or more embodiments of the present disclosure, the present disclosure provides an element display method for an information input interface, wherein, the element display area includes a list of first type elements and a list of second type elements, wherein elements in the list of first type elements and the list of second type elements are sent in different ways, and the method further comprises: in response to a first presentation switching operation between the list of first type elements and the list of second type elements in the element display area, presenting the switching between the list of first type elements and the list of second type elements with a damping effect; and/or in response to a second presentation switching operation on element lists within the list of first type elements or within the list of second type elements, presenting the switching of the elements with an undamping effect.

According to one or more embodiments of the present disclosure, the present disclosure provides an element display method for an information input interface, wherein, the first operation comprises a click operation for a preset duration and/or a slide operation along a first preset angle range.

According to one or more embodiments of the present disclosure, the present disclosure provides an element display method for an information input interface, wherein the method further comprises: in response to a slide operation along a first preset angle range in the element identification area, moving and presenting the element display area at a second preset angle; and/or, in response to a slide operation along a second preset angle range in the element display area, moving and presenting the element identification area at a first preset angle; wherein, the first preset angle range includes the first preset angle and the second preset angle range includes the second preset angle.

According to one or more embodiments of the present disclosure, the present disclosure provides an element display method for an information input interface, wherein the method further comprises: while enlarging and displaying the element identification area, in response to a fourth operation on a target element theme control comprised in the element identification area, moving and presenting the element display area at the second preset angle and positioning it to present an element list corresponding to the target element theme control.

According to one or more embodiments of the present disclosure, the present disclosure provides an element display apparatus for an information input interface, which comprises: a panel display module configured to display an element identification area and an element display area on an information input interface; an instruction acquisition module configured to acquire, in response to a first operation on the element identification area, an enlargement instruction corresponding to the first operation; an enlargement and display module configured to control the element identification area to be enlarged and displayed based on the enlargement instruction.

According to one or more embodiments of the present disclosure, the present disclosure provides an element display apparatus for an information input interface, wherein the enlargement and display module is specifically configured to enlarge and display both a size of the element identification area and element theme controls comprised in the element identification area based on the enlargement instruction, wherein the element theme controls comprise element theme icons and/or element theme names.

According to one or more embodiments of the present disclosure, the present disclosure provides an element display apparatus for an information input interface, wherein the apparatus further comprises: a state marking module configured to, while the element identification area is enlarged and displayed, in response to a second operation on the element theme control comprised in the element identification area, mark the element theme control as a movable state; a position determination module configured to determine a target position in response to a third operation on the element identification area; a position moving module configured to move the element theme control in the movable state from a current position to the target position.

According to one or more embodiments of the present disclosure, the present disclosure provides an element display apparatus for an information input interface, wherein, when determining a target position in response to a third operation on the element identification area, the position determination module comprises: a trajectory acquisition unit configured to acquire, in response to a drag operation on the element theme control in the movable state, a drag trajectory corresponding to the drag operation, wherein the drag operation is successive to the second operation; a movement parameter determination unit configured to determine, in response to a drag release operation on the element theme control in the movable state, a horizontal movement parameter corresponding to the drag trajectory; a position determination unit configured to determine the target position based on the horizontal movement parameter.

According to one or more embodiments of the present disclosure, the present disclosure provides an element display apparatus for an information input interface, wherein the position determination module further comprises: a control moving unit configured to, while acquiring a drag trajectory corresponding to a drag operation in response to the drag operation on the element theme control in the movable state, control the element theme control in the movable state to be moved following the drag operation.

According to one or more embodiments of the present disclosure, the present disclosure provides an element display apparatus for an information input interface, wherein, while controlling the element theme control in the movable state to be moved following the drag operation, the control moving unit is further configured to control a first element theme control to be moved in a preset direction, wherein, the first element theme control is an element theme control corresponding to a position through which the drag trajectory passes, and the preset direction is a direction opposite to the drag trajectory.

According to one or more embodiments of the present disclosure, the present disclosure provides an element display apparatus for an information input interface, wherein, when determining a target position in response to a third operation on the element identification area, the position determination module comprises: a position acquisition unit configured to acquire, in response to a click operation on an element theme control in a non-movable state, a position where the element theme control in the non-movable state is located; a position determination unit configured to determine the position where the element theme control in the non-movable state is located as the target position.

According to one or more embodiments of the present disclosure, the present disclosure provides an element display apparatus for an information input interface, wherein, the element display area includes at least one row of element lists, and each element list includes at least one element. The apparatus further comprises: a slide information acquisition module configured to acquire, in response to a vertical slide operation on the element display area, slide information corresponding to the slide operation in real time; a target element list determination module configured to determine target element lists based on the slide information, wherein, the target element lists are composed of elements comprised in the same element theme, or the target element lists are composed of elements comprised in a plurality of different element themes; a target element list display module configured to display the target element lists in the element display area.

According to one or more embodiments of the present disclosure, the present disclosure provides an element display apparatus for an information input interface, wherein, the target element list determination module comprises: a current element list acquisition unit configured to acquire current element lists in the element display area; an element list deletion unit configured to delete, in response to a slide distance comprised in the slide information being greater than a preset length, a first element list in the current element lists, wherein the first element list is a list of at least one row of elements in the current element list; an element list addition unit configured to add a second element list to the current element lists to obtain the target element lists.

According to one or more embodiments of the present disclosure, the present disclosure provides an element display apparatus for an information input interface, wherein, in a case where the vertical slide operation is an upward slide, the first element list is a first row of the current element lists, and the second element list is an element list following the last row of the current element lists; in a case where the vertical slide operation is a downward slide, the first element list is the last row of the current element lists, and the second element list is an element list preceding the first row of the current element lists.

According to one or more embodiments of the present disclosure, the present disclosure provides an element display apparatus for an information input interface, wherein, while displaying the target element lists in the element display area, the target element list display module is further configured to display, in a case where the target element lists are composed of elements comprised in a plurality of different element themes, corresponding element theme names in a preset area in the element display area.

According to one or more embodiments of the present disclosure, the present disclosure provides an element display apparatus for an information input interface, wherein, the element display area includes a list of first type elements and a list of second type elements, wherein elements in the list of first type elements and the list of second type elements are sent in different ways, and the apparatus further comprises: a damping presentation module configured to present, in response to a first presentation switching operation between the list of first type elements and the list of second type elements in the element display area, the switching between the list of first type elements and the list of second type elements with a damping effect; and/or an undamping presentation module configured to present, in response to a second presentation switching operation on element lists within the list of first type elements or within the list of second type elements, the switching of the elements with an undamping effect.

According to one or more embodiments of the present disclosure, the present disclosure provides an element display apparatus for an information input interface, wherein, the first operation includes a click operation for a preset duration and/or a slide operation along a first preset angle range.

According to one or more embodiments of the present disclosure, the present disclosure provides an element display apparatus for an information input interface, wherein, the apparatus further comprises: an element display area moving and presenting module configured to move and present, in response to a slide operation along a first preset angle range in the element identification area, the element display area at a second preset angle; and/or, in response to a slide operation along a second preset angle range in the element display area, move and present the element identification area at a first preset angle; wherein, the first preset angle range includes the first preset angle and the second preset angle range includes the second preset angle.

According to one or more embodiments of the present disclosure, the present disclosure provides an element display apparatus for an information input interface, wherein, the element display area moving and presenting module is further configured to, while the element identification area is enlarged and displayed, in response to a fourth operation on a target element theme control comprised in the element identification area, move and present the element display area at the second preset angle and position the element display area to present an element list corresponding to the target element theme control.

According to one or more embodiments of the present disclosure, the present disclosure provides an electronic device, comprising:
one or more processors;
a memory for storing one or more programs;
wherein the one or more programs, when executed by the one or more processors, cause the one or more processors to implement the element display method for the information input interface according to any one provided in the present disclosure.

According to one or more embodiments of the present disclosure, the present disclosure provides a computer readable storage medium having stored thereon a computer program which, when executed by a processor, implements the element display method for the information input interface according to any one provided in the present disclosure.

The embodiment of the present disclosure also provides a computer program product comprising computer programs or instructions which, when executed by a processor, implement the element display method for the information input interface according to the above.

The above description is only an explanation for the preferred embodiments of the present disclosure and the applied technical principles.

Furthermore, although the operations are depicted in a particular order, this should not be understood as requiring that these operations be executed in the particular order shown or in a sequential order. Under certain circumstances, multitasking and parallel processing may be beneficial. Likewise, although several specific implementation details are contained in the above discussion, these should not be construed as limiting the scope of the present disclosure.

## Claims

1. An element display method for an information input interface, comprising:
displaying (S101; S201) an element identification area and an element display area on an information input interface, wherein the element identification area comprises a plurality of element theme controls, and the plurality of element theme controls comprise element theme icons and/or element theme names;
in response to a first operation on the element identification area, acquiring (S102; S202) an enlargement instruction corresponding to the first operation;
controlling (S103; S203) the element identification area to be enlarged and displayed based on the enlargement instruction;
while the element identification area is enlarged and displayed, in response to a second operation on an element theme control comprised in the element identification area, marking (S204) the element theme control as being in a movable state;
determining (S205) a target position in response to a third operation on the element identification area; and
moving (S206) the element theme control in the movable state from a current position to the target position,
wherein the controlling (S103; S203) the element identification area to be enlarged and displayed based on the enlargement instruction comprises:
enlarging and displaying both the plurality of element theme controls and a size of the element identification area based on the enlargement instruction.

2. The method according to Claim 1, **characterized in that**, the determining (S205) the target position in response to the third operation on the element identification area comprises:
in response to a drag operation on the element theme control in the movable state, acquiring a drag trajectory corresponding to the drag operation, wherein the drag operation is successive to the second operation;
in response to a drag release operation on the element theme control in the movable state, determining a horizontal movement parameter corresponding to the drag trajectory;
determining the target position based on the horizontal movement parameter,
optionally, while acquiring the drag trajectory corresponding to the drag operation in response to the drag operation on the element theme control in the movable state, the method further comprises:
in response to the drag operation on the element theme control in the movable state, controlling the element theme control in the movable state to be moved following the drag operation,
optionally, while controlling the element theme control in the movable state to be moved following the drag operation, the method further comprises:
controlling a first element theme control to be moved in a preset direction, wherein the first element theme control is an element theme control corresponding to a position through which the drag trajectory passes, and the preset direction is a direction opposite to the drag trajectory.

3. The method according to Claim 1, **characterized in that** the determining (S205) the target position in response to the third operation on the element identification area comprises:
in response to a click operation on an element theme control in a non-movable state, acquiring a position where the element theme control in the non-movable state is located;
determining the position where the element theme control in the non-movable state is located as the target position.

4. The method according to Claim 1, **characterized in that**, the element display area includes at least one row of element lists, and each element list includes at least one element; the method further comprises:
in response to a vertical slide operation on the element display area, acquiring (S301) slide information corresponding to the slide operation in real time;
determining (S302) target element lists based on the slide information, wherein, the target element lists are composed of elements comprised in the same element theme, or the target element lists are composed of elements comprised in a plurality of different element themes;
displaying (S303) the target element lists in the element display area.

5. The method according to Claim 4, **characterized in that**, the determining (S302) the target element lists based on the slide information comprises:
acquiring current element lists in the element display area;
in response to a slide distance comprised in the slide information being greater than a preset length, deleting a first element list in the current element lists, wherein the first element list is a list of at least one row of elements in the current element lists;
adding a second element list to the current element lists to obtain the target element lists,
optionally, the vertical slide operation is an upward slide, the first element list is the first row of the current element lists, and the second element list is an element list following the last row of the current element lists,
optionally, the vertical slide operation is a downward slide, the first element list is the last row of the current element lists, and the second element list is an element list preceding the first row of the current element lists,
optionally, the element display area includes a list of first type elements and a list of second type elements, elements in the list of first type elements and the list of second type elements are sent in different ways, and the method further comprises:
in response to a first presentation switching operation between the list of first type elements and the list of second type elements in the element display area, presenting the switching between the list of first type elements and the list of second type elements with a damping effect; and/or
in response to a second presentation switching operation on element lists within the list of first type elements or within the list of second type elements, presenting the switching of the elements with an undamping effect.

6. The method according to Claim 4, **characterized in that**, the displaying (S303) the target element lists in the element display area comprises:
in a case where the target element lists are composed of elements comprised in a plurality of different element themes, displaying corresponding element theme names in a preset area in the element display area.

7. The method according to Claim 1, **characterized in that**, the first operation comprises a click operation for a preset duration and/or a slide operation along a first preset angle range.

8. The method of Claim 7, **characterized by** further comprising:
in response to a slide operation along a first preset angle range in the element identification area, moving and presenting the element display area at a second preset angle; and/or,
in response to a slide operation along a second preset angle range in the element display area, moving and presenting the element identification area at a first preset angle;
wherein, the first preset angle range includes the first preset angle and the second preset angle range includes the second preset angle.

9. The method of Claim 7, **characterized by** further comprising:
while the element identification area is enlarged and displayed, in response to a fourth operation on a target element theme control comprised in the element identification area, moving and presenting the element display area at the second preset angle and positioning the element display area to present an element list corresponding to the target element theme control.

10. An electronic device, comprising:
one or more processors;
a storage means for storing one or more programs;
wherein the one or more programs, when executed by the one or more processors, cause the one or more processors to implement the method according to any one of Claims 1 to 9.

11. A computer readable storage medium having stored thereon a computer program which, when executed by a processor, implements the method according to any one of Claims 1 to 9.

12. A computer program product comprising computer programs or instructions which, when executed by a processor, implement the method according to any one of Claims 1 to 9.

## Patentansprüche

1. Elementanzeigeverfahren für eine Informationseingabeschnittstelle, umfassend
Anzeigen (S101; S201) eines Elementidentifizierungsbereichs und eines Elementanzeigebereichs auf einer Informationseingabeschnittstelle, wobei der Elementidentifizierungsbereich eine Vielzahl von Elementthemensteuerelementen umfasst und die Vielzahl von Elementthemensteuerelementen Elementthemensymbole und/oder Elementthemennamen umfassen;
als Reaktion auf eine erste Operation am Elementidentifizierungsbereich Erfassen (S102; S202) einer Vergrößerungsanweisung, die der ersten Operation entspricht;
Steuern (S103; S203) des Elementidentifizierungsbereichs, der auf Grundlage der Vergrößerungsanweisung vergrößert und angezeigt werden soll;
während der Elementidentifizierungsbereich vergrößert und angezeigt wird, als Reaktion auf eine zweite Operation an einem im Elementidentifizierungsbereich enthaltenen Elementthemensteuerelement, Markieren (S204) des Elementthemensteuerelements als in einem beweglichen Zustand befindlich;
Bestimmen (S205) einer Zielposition als Reaktion auf eine dritte Operation am Elementidentifizierungsbereich und
Bewegen (S206) des Elementthemensteuerelements im beweglichen Zustand von einer aktuellen Position zur Zielposition,
wobei das Steuern (S103; S203) des Elementidentifizierungsbereichs, der auf Grundlage der Vergrößerungsanweisung vergrößert und angezeigt werden soll, Folgendes umfasst:
Vergrößern und Anzeigen sowohl der Vielzahl von Elementthemensteuerelementen als auch einer Größe des Elementidentifizierungsbereichs auf Grundlage der Vergrößerungsanweisung.

2. Verfahren nach Anspruch 1, **dadurch gekennzeichnet, dass** das Bestimmen (S205) der Zielposition als Reaktion auf die dritte Operation am Elementidentifizierungsbereich Folgende umfasst:
als Reaktion auf eine Zugoperation am Elementthemensteuerelement im beweglichen Zustand, Erfassen einer Zugbahn, die der Zugoperation entspricht, wobei die Zugoperation auf die zweite Operation folgt;
als Reaktion auf eine Zugfreigabeoperation am Elementthemensteuerelement im beweglichen Zustand, Bestimmen eines horizontalen Bewegungsparameters, welcher der Zugbahn entspricht;
Bestimmen der Zielposition auf Grundlage des horizontalen Bewegungsparameters,
wahlweise, wobei während des Erfassens der Zugbahn, die der Zugoperation entspricht, als Reaktion auf die Zugoperation am Elementthemensteuerungselement im beweglichen Zustand, das Verfahren weiter Folgendes umfasst:
als Reaktion auf die Zugoperation am Elementthemensteuerelement im beweglichen Zustand, Steuern des Elementthemensteuerelements im beweglichen Zustand so, dass es anschließend an die Zugoperation bewegt wird,
wahlweise, wobei während des Steuerns des Elementthemensteuerelements im beweglichen Zustand anschließend an die Zugoperation das Verfahren weiter Folgendes umfasst:
Steuern eines ersten Elementthemensteuerelements, das in eine voreingestellte Richtung bewegt werden soll, wobei das erste Elementthemensteuerelement ein Elementthemensteuerelement ist, das einer Position entspricht, durch welche die Zugbahn hindurchgeht, und die voreingestellte Richtung eine Richtung ist, die der Zugbahn entgegengesetzt ist.

3. Verfahren nach Anspruch 1, **dadurch gekennzeichnet, dass** das Bestimmen (S205) der Zielposition als Reaktion auf die dritte Operation am Elementidentifizierungsbereich Folgendes umfasst:
als Reaktion auf eine Klickoperation an einem Elementthemensteuerelement in einem nicht beweglichen Zustand, Erfassen einer Position, wo sich das Elementthemensteuerelement im nicht beweglichen Zustand befindet;
Bestimmen der Position, wo sich das Elementthemensteuerelement im nicht beweglichen Zustand befindet, als die Zielposition.

4. Verfahren nach Anspruch 1, **dadurch gekennzeichnet, dass** der Elementanzeigebereich mindestens eine Zeile von Elementlisten einschließt und jede Elementliste mindestens ein Element einschließt; wobei das Verfahren weiter Folgendes umfasst:
als Reaktion auf eine vertikale Schiebeoperation am Elementanzeigebereich, Erfassen (S301) von Schiebeinformationen, die der Schiebebewegung entsprechen, in Echtzeit;
Bestimmen (S302) von Zielelementlisten auf Grundlage der Schiebeinformationen, wobei die Zielelementlisten aus Elementen bestehen, die in demselben Elementthema enthalten sind, oder die Zielelementlisten aus Elementen bestehen, die in einer Vielzahl von unterschiedlichen Elementthemen enthalten sind;
Anzeigen (S303) der Zielelementlisten im Elementanzeigebereich.

5. Verfahren nach Anspruch 4, **dadurch gekennzeichnet, dass** das Bestimmen (S302) der Zielelementlisten auf Grundlage der Schiebeinformationen Folgendes umfasst:
Erfassen aktueller Elementlisten im Elementanzeigebereich;
als Reaktion darauf, dass eine in den Schiebeinformationen enthaltener Schiebeentfernung größer als eine voreingestellte Länge ist, Löschen einer ersten Elementliste in den aktuellen Elementlisten, wobei die erste Elementliste eine Liste von mindestens einer Zeile von Elementen in den aktuellen Elementlisten ist;
Hinzufügen einer zweiten Elementliste zu den aktuellen Elementlisten, um die Zielelementlisten zu erhalten,
wahlweise ist die vertikale Schiebeoperation eine Aufwärtsverschiebung, die erste Elementliste ist die erste Zeile der aktuellen Elementlisten, und die zweite Elementliste ist eine Elementliste, die der letzten Zeile der aktuellen Elementlisten folgt,
wahlweise ist die vertikale Schiebeoperation eine Abwärtsverschiebung, die erste Elementliste ist die letzte Zeile der aktuellen Elementlisten, und die zweite Elementliste ist eine Elementliste, die der ersten Zeile der aktuellen Elementlisten vorausgeht.
wahlweise schließt der Elementanzeigebereich eine Liste von Elementen ersten Typs und eine Liste von Elementen zweiten Typs ein, wobei die Elemente in der Liste von Elementen ersten Typs und der Liste von Elementen zweiten Typs auf unterschiedliche Weisen gesendet werden, und das Verfahren umfasst weiter:
als Reaktion auf eine erste Darstellungswechseloperation zwischen der Liste von Elementen ersten Typs und der Liste von Elementen zweiten Typs im Elementanzeigebereich, Darstellen des Wechsels zwischen der Liste von Elementen ersten Typs und der Liste von Elementen zweiten Typs mit einem Dämpfungseffekt; und/oder
als Reaktion auf eine zweite Darstellungswechseloperation an Elementlisten innerhalb der Liste von Elementen ersten Typs oder innerhalb der Liste von Elementen zweiten Typs, Darstellen des Wechsels der Elemente mit einem Entdämpfungseffekt.

6. Verfahren nach Anspruch 4, **dadurch gekennzeichnet, dass** das Anzeigen (S303) der Zielelementlisten im Elementanzeigebereich Folgendes umfasst:
in einem Fall, in dem die Zielelementlisten aus Elementen bestehen, die in einer Vielzahl von unterschiedlichen Elementthemen enthalten sind, Anzeigen von entsprechenden Elementthemennamen in einem voreingestellten Bereich im Elementanzeigebereich.

7. Verfahren nach Anspruch 1, **dadurch gekennzeichnet, dass** die erste Operation eine Klickoperation für eine voreingestellte Dauer und/oder eine Schiebeoperation entlang eines ersten voreingestellten Winkelbereichs umfasst.

8. Verfahren nach Anspruch 7, **dadurch gekennzeichnet, dass** es weiter Folgendes umfasst:
als Reaktion auf eine Schiebeoperation entlang eines ersten voreingestellten Winkelbereichs im Elementidentifizierungsbereich, Bewegen und Darstellen des Elementanzeigebereichs in einem zweiten voreingestellten Winkel und/oder,
als Reaktion auf eine Schiebeoperation entlang eines zweiten voreingestellten Winkelbereichs im Elementanzeigebereich, Bewegen und Darstellen des Elementidentifizierungsbereichs in einem ersten voreingestellten Winkel;
wobei der erste voreingestellte Winkelbereich den ersten voreingestellten Winkel einschließt und der zweite voreingestellte Winkelbereich den zweiten voreingestellten Winkel einschließt.

9. Verfahren nach Anspruch 7, **dadurch gekennzeichnet, dass** es weiter Folgendes umfasst:
während der Elementidentifizierungsbereich vergrößert und angezeigt wird, als Reaktion auf eine vierte Operation an einem Zielelementthemensteuerelement, das im Elementidentifizierungsbereich enthalten ist, Bewegen und Darstellen des Elementanzeigebereichs im zweiten voreingestellten Winkel und Positionieren des Elementanzeigebereichs so, dass eine Elementliste dargestellt wird, die dem Zielelementthemensteuerelement entspricht.

10. Elektronische Vorrichtung, umfassend:
einen oder mehrere Prozessoren;
ein Speichermittel zum Speichern eines oder mehrerer Programme;
wobei das eine oder die mehreren Programme, wenn sie von dem einen oder mehreren Prozessoren ausgeführt werden, den einen oder mehrere Prozessoren veranlassen, das Verfahren nach einem der Ansprüche 1 bis 9 umzusetzen.

11. Computerlesbares Speichermedium mit darauf gespeichertem Computerprogramm, das, wenn es von einem Prozessor ausgeführt wird, das Verfahren nach einem der Ansprüche 1 bis 9 umsetzt.

12. Computerprogrammprodukt, das Computerprogramme oder Anweisungen umfasst, die, wenn sie von einem Prozessor ausgeführt werden, das Verfahren nach einem der Ansprüche 1 bis 9 umsetzen.

## Revendications

1. Procédé d'affichage d'éléments pour une interface de saisie d'informations, comprenant
l'affichage (S101 ; S201) d'une zone d'identification d'élément et d'une zone d'affichage d'élément sur une interface de saisie d'informations, dans lequel la zone d'identification d'élément comprend une pluralité de commandes de thème d'élément, et la pluralité de commandes de thème d'élément comprennent des icônes de thème d'élément et/ou des noms de thèmes d'éléments ;
en réponse à une première opération sur la zone d'identification de l'élément, l'acquisition (S102 ; S202) d'une instruction d'agrandissement correspondant à la première opération ;
la commande (S103 ; S203) de la zone d'identification d'élément à agrandir et à afficher en fonction de l'instruction d'agrandissement ;
tandis que la zone d'identification d'élément est agrandie et affichée, en réponse à une deuxième opération sur une commande de thème d'élément comprise dans la zone d'identification de l'élément, le marquage (S204) de la commande de thème d'élément comme étant dans un état mobile ;
la détermination (S205) d'une position cible en réponse à une troisième opération sur la zone d'identification d'élément ; et
le déplacement (S206) de la commande de thème d'élément dans l'état mobile d'une position actuelle à la position cible,
dans lequel la commande (S103 ; S203) de la zone d'identification de l'élément à agrandir et à afficher sur la base des instructions d'agrandissement comprend :
l'agrandissement et l'affichage à la fois de la pluralité de commandes de thème d'élément et d'une taille de la zone d'identification de l'élément en fonction de l'instruction d'agrandissement.

2. Procédé selon la revendication 1, **caractérisé en ce que** la détermination (S205) de la position cible en réponse à la troisième opération sur la zone d'identification de l'élément comprend :
en réponse à une opération de glissement sur la commande de thème de l'élément à l'état mobile, l'acquisition d'une trajectoire de glissement correspondant à l'opération de glissement, dans lequel l'opération de glissement suit la deuxième opération ;
en réponse à une opération de relâchement de glissement sur la commande de thème de l'élément à l'état mobile, la détermination d'un paramètre de mouvement horizontal correspondant à la trajectoire de glissement ;
la détermination de la position cible en fonction du paramètre de mouvement horizontal,
en option, lors de l'acquisition de la trajectoire de glissement correspondant à l'opération de glissement en réponse à l'opération de glissement sur la commande de thème de l'élément à l'état mobile, le procédé comprend en outre :
en réponse à l'opération de glissement sur la commande de thème de l'élément à l'état mobile, la commande de la commande du thème de l'élément à l'état mobile pour qu'elle soit déplacée suite à l'opération de glissement,
en option, tout en commandant la commande de thème de l'élément à l'état mobile, à déplacer suite à l'opération de glissement, le procédé comprend en outre :
la commande d'une première commande de thème d'élément à déplacer dans une direction prédéfinie, dans lequel la première commande de thème d'élément est une commande de thème d'élément correspondant à une position par laquelle passe la trajectoire de glissement, et la direction prédéfinie est une direction opposée à la trajectoire de glissement.

3. Procédé selon la revendication 1, **caractérisé en ce que** la détermination de la position cible (S205) en réponse à la troisième opération sur la zone d'identification de l'élément comprend :
en réponse à une opération de clic sur une commande de thème d'élément à l'état non mobile, l'acquisition d'une position dans laquelle se trouve la commande de thème d'élément à l'état non mobile ;
la détermination de la position dans laquelle se trouve la commande de thème d'élément à l'état non mobile comme position cible.

4. Procédé selon la revendication 1, **caractérisé en ce que** la zone d'affichage des éléments inclut au moins une ligne de listes d'éléments, et chaque liste d'éléments inclut au moins un élément ; le procédé comprend en outre :
en réponse à une opération de glissement vertical sur la zone d'affichage de l'élément, l'acquisition en temps réel des informations de glissement (S301) correspondant à l'opération de glissement ;
la détermination (S302) de listes d'éléments cibles en fonction des informations de glissement, dans lequel les listes d'éléments cibles sont composées d'éléments compris dans le même thème d'éléments, ou les listes d'éléments cibles sont composées d'éléments compris dans une pluralité de thèmes d'éléments différents ;
l'affichage (S303) des listes d'éléments cibles dans la zone d'affichage d'éléments.

5. Procédé selon la revendication 4, **caractérisé en ce que** la détermination (S302) des listes d'éléments cibles à partir des informations de glissement comprend :
l'acquisition de listes d'éléments actuelles dans la zone d'affichage des éléments ;
en réponse à une distance de glissement comprise dans les informations de glissement supérieure à une longueur prédéfinie, la suppression d'une première liste d'éléments dans les listes d'éléments actuelles, dans lequel la première liste d'éléments est une liste d'au moins une ligne d'éléments dans les listes d'éléments actuelles ;
l'ajout d'une deuxième liste d'éléments aux listes d'éléments actuelles pour obtenir les listes d'éléments cibles,
en option, l'opération de glissement vertical est un glissement vers le haut, la première liste d'éléments est la première ligne des listes d'éléments actuelles, et la deuxième liste d'éléments est une liste d'éléments suivant la dernière ligne des listes d'éléments actuelles,
en option, l'opération de glissement vertical est un glissement vers le bas, la première liste d'éléments est la dernière ligne des listes d'éléments actuelles, et la deuxième liste d'éléments est une liste d'éléments précédant la première ligne des listes d'éléments actuelles,
en option, la zone d'affichage d'élément inclut une liste d'éléments de premier type et une liste d'éléments de deuxième type, des éléments dans la liste d'éléments de premier type et de second type sont transmis différemment et le procédé comprend en outre :
en réponse à une première opération de commutation de présentation entre la liste des éléments de premier type et la liste des éléments de deuxième type dans la zone d'affichage des éléments, la présentation de la commutation entre la liste des éléments de premier type et la liste des éléments de deuxième type avec un effet d'amortissement ; et/ou
en réponse à une deuxième opération de commutation de présentation sur des listes d'éléments dans la liste d'éléments de premier type ou dans la liste d'éléments de deuxième type, la présentation de la commutation des éléments avec un effet non amorti.

6. Procédé selon la revendication 4, **caractérisé en ce que** l'affichage (S303) des listes d'éléments cibles dans la zone d'affichage des éléments comprend :
dans le cas où les listes d'éléments cibles sont composées d'éléments appartenant à plusieurs thèmes d'éléments différents, l'affichage de noms de thèmes d'éléments correspondants dans une zone prédéfinie de la zone d'affichage des éléments.

7. Procédé selon la revendication 1, **caractérisé en ce que** la première opération comprend une opération de clic pendant une durée prédéfinie et/ou une opération de glissement le long d'une première plage d'angles prédéfinie.

8. Procédé selon la revendication 7, **caractérisé en ce qu'**il comprend en outre :
en réponse à une opération de glissement le long d'une première plage d'angles prédéfinie dans la zone d'identification de l'élément, le déplacement et la présentation de la zone d'affichage de l'élément selon un deuxième angle prédéfini ; et/ou,
en réponse à une opération de glissement le long d'une deuxième plage d'angles prédéfinie dans la zone d'affichage de l'élément, le déplacement et la présentation de la zone d'identification de l'élément selon un premier angle prédéfini ;
dans lequel la première plage d'angles prédéfinis inclut le premier angle prédéfini et la deuxième plage d'angles prédéfinis inclut le deuxième angle prédéfini.

9. Procédé selon la revendication 7, **caractérisé en ce qu'**il comprend en outre :
tandis que la zone d'identification de l'élément est agrandie et affichée, en réponse à une quatrième opération sur une commande de thème d'élément cible comprise dans la zone d'identification de l'élément, le déplacement et la présentation de la zone d'affichage de l'élément au deuxième angle prédéfini et le positionnement de la zone d'affichage de l'élément pour présenter une liste d'éléments correspondant à la commande de thème d'élément cible.

10. Dispositif électronique, comprenant :
un ou plusieurs processeurs ;
un moyen de mémoire pour stocker un ou plusieurs programmes ;
dans lequel, les un ou plusieurs programmes, lorsqu'ils sont exécutés par le ou les processeurs, amènent le un ou plusieurs processeurs à mettre en œuvre le procédé selon l'une quelconque des revendications 1 à 9.

11. Support de stockage lisible par ordinateur sur lequel est stocké un programme informatique qui, lorsqu'il est exécuté par un processeur, met en œuvre le procédé selon l'une quelconque des revendications 1 à 9.

12. Produit de programme informatique, comprenant des programmes informatiques ou des instructions qui, lorsqu'ils sont exécutées par un processeur, amènent à mettre en œuvre le procédé selon l'une quelconque des revendications 1 à 9.
